# EUROPÄISCHE PATENTANMELDUNG

(11) **EP 2 763 432 A1**
(43) Veröffentlichungstag der Anmeldung: **06.08.2014**
(21) Anmeldenummer: 13189121.0
(22) Anmeldetag: 17.10.2013
(51) Int. Cl.: H04Q 9/00

(54) **Messsonden-Funkmodul zur Funkübertragung von digitalen Sondensignalen**

(30) Priorität: 05.02.2013 DE 202013100516 U
(71) Anmelder: AFRISO-Euro-Index GmbH, 74363 Güglingen (DE)
(72) Erfinder: Aldinger, Dr. Ulrich, 70192 Stuttgart (DE)
(74) Vertreter: Kohler Schmid Möbus

(57) **Zusammenfassung**

Das erfindungsgemäße Messsonden-Funkmodul (1) zur Funkübertragung von digitalen Messsignalen einer Messsonde (9a, 9b, 10a, 10b) umfasst:
- mindestens einen Anschlusseingang (8a-8d), der ein digitales Messsignal einer Messsonde (9a, 9b, 10a, 10b) erfasst,
- eine Funksendeeinheit (3), die das erfasste digitale Messsignal an einen Empfänger sendet, und
- eine netzunabhängige Energieversorgungseinheit (5), die die Funksendeeinheit (3) mit Energie versorgt,

wobei der mindestens eine Anschlusseingang (8a-8d) mit einer Messsonde (9a, 9b, 10a, 10b) elektrisch verbindbar ist.

## Beschreibung

Die Erfindung betrifft ein Messsonden-Funkmodul zur Funkübertragung von digitalen Messsignalen einer Messsonde.

Im Bereich der Mess-, Regelungs- und Überwachungstechnik werden Messsonden mit Funksendern ausgestattet, um digitale Sondensignalen zu erfassen und drahtlos an einen Empfänger (Basisstation) zu übertragen. Mit solchen Funksendern werden eine oder mehrere Messgrößen, beispielsweise der Füllstand und/oder der Druck eines Tanks, über eine an das Funkmodul angeschlossene Messsonde überwacht. Über- oder unterschreitet die gemessene Größe einen vorgegebenen Wert, so öffnet oder schließt sich ein Kontakt der Messsonde, und das digitale Sondensignal ändert seinen Zustand. Aufgrund dieses Zustandswechsels sendet der Funksender ein Funktelegramm an die Basisstation, um diese über den Zustandswechsel bzw. die Über- oder Unterschreitung der Messgröße zu informieren und so beispielsweise vor dem Überlaufen des Tanks zu warnen.

Ein solcher Funksender ist auf eine elektrische Energieversorgung angewiesen, um bei Bedarf ein Funksignal an die Basisstation senden zu können. Die Energieversorgung wird normalerweise durch den Anschfuss des Funksenders bzw. der Messsonde an ein bestehendes und geeignetes Versorgungsnetz bereitgestellt. Nachteilig ist jedoch, dass häufig am Aufstellungsort der Messsonde entweder keine oder nur eine ungeeignete elektrische Energieversorgung vorhanden ist. In einem solchen Fall müssen entweder Versorgungskabel zum Aufstellungsort der Messsonde gelegt oder eine Vorrichtung zur Energiewandlung, beispielsweise in Form eines Transformators, installiert werden. Derartige Maßnahmen verursachen bei der Installation der Messsonde zusätzliche Kosten und schränken die flexible Verwendung der Messsonde ein, da bei einer nachträglichen Änderung des Aufstellungsorts gegebenenfalls die Versorgungskabel neu verlegt werden müssen. Bei bewegten oder weit von einer Energieversorgung entfernten Aufstellungsorten können herkömmliche Messsonden mit Funksendern daher nicht eingesetzt werden.

Der Erfindung liegt daher die Aufgabe zugrunde, ein Funkmodul zur Erfassung von digitalen Sondensignalen bereitzustellen, welches leicht montierbar, zuverlässig und wartungsfrei betreibbar und universell bei unterschiedlichen Messsonden einsetzbar ist.

Diese Aufgabe wird erfindungsgemäß gelöst durch ein Messsonden-Funkmodul zur Funkübertragung von digitalen Messsignalen einer Messsonde, aufweisend:
- mindestens einen Anschlusseingang, der ein digitales Messsignal einer Messsonde erfasst,
- eine Funksendeeinheit, die das erfasste digitale Messsignal an einen Empfänger sendet, und
- eine netzunabhängige Energieversorgungseinheit, die die Funksendeeinheit mit Energie versorgt,
wobei der mindestens eine Anschlusseingang mit einer Messsonde elektrisch verbindbar ist.

Aufgrund der netzunabhängigen Energieversorgungseinheit kann das erfindungsgemäße Messsonden-Funkmodul leicht an nahezu beliebigen Orten angebracht werden, welche über keine netzgebundene Stromversorgung verfügen müssen. Die aufwändige Installation von Anschlussleitungen von einer Energiequelle zu dem Funkmodul und/oder die Installation einer Vorrichtung zur Energiewandlung, entfallen. Folglich lässt sich das Funkmodul besonders vorteilhaft an schwer zugänglichen Orten, beispielsweise in einem engen Wartungsschacht, oder an Orten, an denen keine feste Stromversorgung zur Verfügung steht, beispielsweise im Freien, einsetzen. Der Anschlusseingang bildet eine universelle elektrische Schnittstelle zur Verbindung mit unterschiedlichen Messsonden.

Die Erfindung ermöglicht das Erkennung des Schaltzustandes einer Messsonde, insbesondere einer Flüssigkeitsmesssonde, Kontaktmanometer, Leckagesonde, Reservemeldung einer Füllstandanzeige, Boden-Wasser Sonde, etc., und die Weitermeldung der Schaltänderung an eine Basisstation (Empfänger). Dazu wird der Schaltzustand analysiert (Kontakte der angeschlossenen Messsonde geöffnet oder geschlossen, also Stromkreis geschlossen oder offen), und dieser Schaltzustand wird per Funk an die Basisstation weitergemeldet. Das Funkmodul steht im ständigen Kontakt zur Basisstation, wodurch sichergestellt ist, dass eine sichere Meldung bzw. auch Alarmmeldung abgesetzt werden. Trifft ein ausstehendes Funktelegramm nicht ein, wird von der Basisstation automatisch eine entsprechende Meldung generiert (konfigurierbar als Störung oder Alarm).

Besonders bevorzugt ist der mindestens eine Anschlusseingang für eine Steckverbindung mit der Messsonde ausgebildet. Durch die universelle Steckverbindung lässt sich der Anschlusseingang direkt oder über ein Kabel wahlweise mit einer Vielzahl von unterschiedlichen Messsonden verbinden, was den Einsatzbereich und die Flexibilität des Funkmoduls erhöht. So lässt sich ein Anschlusseingang zum Beispiel wahlweise mit einer Drucksonde, Kontaktmanometer, einer Temperatursonde, einer Feuchtigkeitssonde, einer Leckagesonde, einer Füllstandssonde oder einer Boden-Wasser-Sonde verbinden.

Weiterhin bevorzugt ist die Energieversorgungseinheit durch Solarzellen gespeist, wodurch das Funkmodul umweltfreundlich und unabhängig von einer Netz- oder Batterieversorgung bei ausreichenden Lichtverhältnissen betrieben werden kann. Dabei ist die Speicherkapazität der Energieversorgungseinheit im Funkmodul so dimensioniert, dass die notwendigen Funktelegramme auch ohne Lichteinstrahlung über einen längeren Zeitraum, beispielsweise mehrere Tage, gesendet werden können.

Vorzugsweise weist die Energieversorgungseinheit mindestens eine Batterie oder einen Akkumulator auf. Vorteilhaft kann mit Hilfe der Batterie, beispielsweise in Form einer Knopfzelle, der Betrieb über einen längeren Zeitraum ohne Licht gewährleistet werden, oder das universelle Funkmodul gänzlich ohne Licht betrieben werden. Vorteilhaft ist die Batterie auswechselbar gestaltet, sodass diese gegebenenfalls ersetzt werden kann.

Zum Anschließen an eine Messsonde mit n Schaltkontakten weist das Funkmodul n Anschlusseingänge auf. So kann beispielsweise bei einem Kontaktmanometer mit vier Schaltkontakten der Schaltzustand aller vier Schaltkontakte überwacht und eine Schaltänderung sicher an die Basisstation gemeldet werden. Für die meisten Anwendungen sind vier Anschlusseingänge ausreichend.

Die Erfindung betrifft auch eine Messsonde, insbesondere Kontaktmanometer, Leckagesonde, Füllstandsonde, Boden-Wasser Sonde oder dgl., mit einem wie oben beschriebenen Funkmodul, dessen mindestens ein Anschlusseingang mit der Messsonde elektrisch verbunden ist, z.B. indem das Funkmodul mit seinem Anschlusseingang direkt auf die Messsonde aufgesteckt ist oder mittels Kabel mit der Messsonde verbunden ist.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung schematisch dargestellt und wird anhand von Ausführungsbeispielen näher erläutert. Es zeigen:
- Fig. 1: eine schematische Darstellung des erfindungsgemäßen Funkmoduls mit vier Anschlusseingängen; und
- Fig. 2: eine perspektivische Darstellung des erfindungsgemäßen Funkmoduls mit einer angeschlossenen Messsonde.

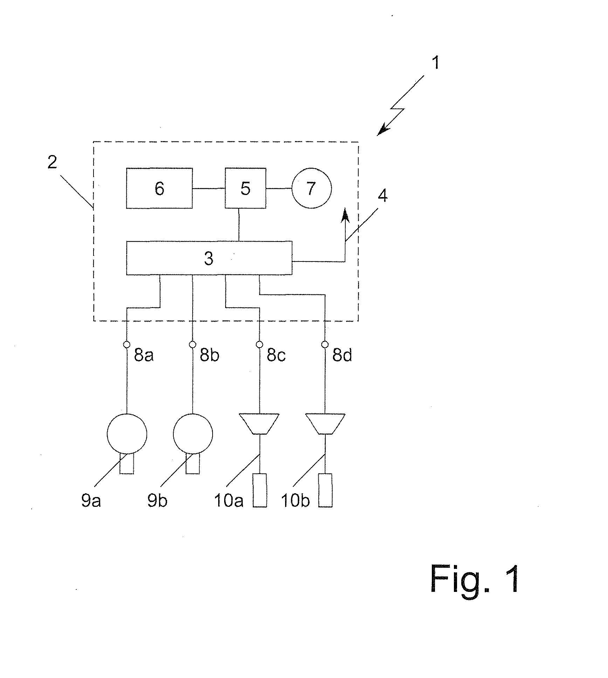

**Fig. 1** zeigt in einer schematischen Darstellung ein Funkmodul 1 zur Funkübertragung von digitalen Signalen. Hierzu sind in einem Gehäuse 2 des Funkmoduls 1 eine Funksendeeinheit **3** mit Antenne **4** und eine netzunabhängige Energieversorgungseinheit **5** angeordnet. Die netzunabhängige Energieversorgungseinheit 5 wird von einer Solarzelle **6** und einer optionalen Zusatzbatterie **7** gespeist, welche in Fig. 1 als Knopfzelle realisiert ist. Neben Batterien lassen sich in gleicher Weise Akkumulatoren als zusätzliche Energiespeicher einsetzen. Die Funksendeeinheit 3 weist vier Anschlusseingänge **8a** bis **8d** zur Erfassung von vier digitalen Signalen auf. Bei den digitalen Signalen kann es sich um Schaltsignale von einer oder von mehreren Messsonden handeln. Prinzipiell sind jedoch digitale Signale von beliebigen Quellen erfassbar. So können die Signale auch von im Funkmodul 1 integrierten, d.h. direkt damit verbundenen Sensoren, wie beispielsweise von Temperatur- und/oder Feuchtigkeitssensoren stammen.

In Fig. 1 sind die Anschlusseingänge 8a und 8b jeweils mit einem Kontaktmanometer **9a** und **9b** verbunden. Die beiden verbleibenden Anschlusseingänge 8c und 8d sind dagegen jeweils mit einem Füllstandsmessgerät **10a** und **10b** verbunden. In Abhängigkeit davon, ob einer der Kontakte der Messsonden **9a, 9b, 10a** und **10b** offen oder geschlossen ist, liegt an dem zugehörigen Anschlusseingang des Funkmoduls 1 ein unterschiedlicher Schaltzustand an, der durch die Funksendeeinheit 3 ausgewertet wird. Eine Erfassung der digitalen Signale an den Anschlusseingängen kann dabei entweder nur bei einer Zustandsänderung des Signals oder in regelmäßigen Abständen erfolgen. Ändert sich beispielsweise aufgrund einer Druckschwankung der Schaltzustand des Kontaktmanometers 9a, so ändert das Signal am Anschlusseingang 8a seinen Schaltzustand, was von der Funksendeeinheit 3 erfasst wird. Dieser Wechsel des Schaltzustandes wird in ein entsprechendes Funktelegramm codiert und mit Hilfe der Antenne 4 über Funk zu einem Empfänger (nicht gezeigt) übertragen. Im Falle einer periodischen Übertragung der Funktelegramme des Funkmoduls 1 an einen Empfänger kann zusätzlich die Funktionsfähigkeit und die Erreichbarkeit des Funkmoduls 1 überwacht werden. Treffen keine Funktelegramme mehr beim Empfänger ein, so ist das Funkmodul 1 aufgrund mangelnder Energieversorgung ausgefallen, defekt oder befindet sich außerhalb der Reichweite des Empfängers. In diesem Fall kann der Empfänger ein Warnsignal an einen Benutzer weiterleiten, der die Ursache der fehlenden Funktelegramme behebt.

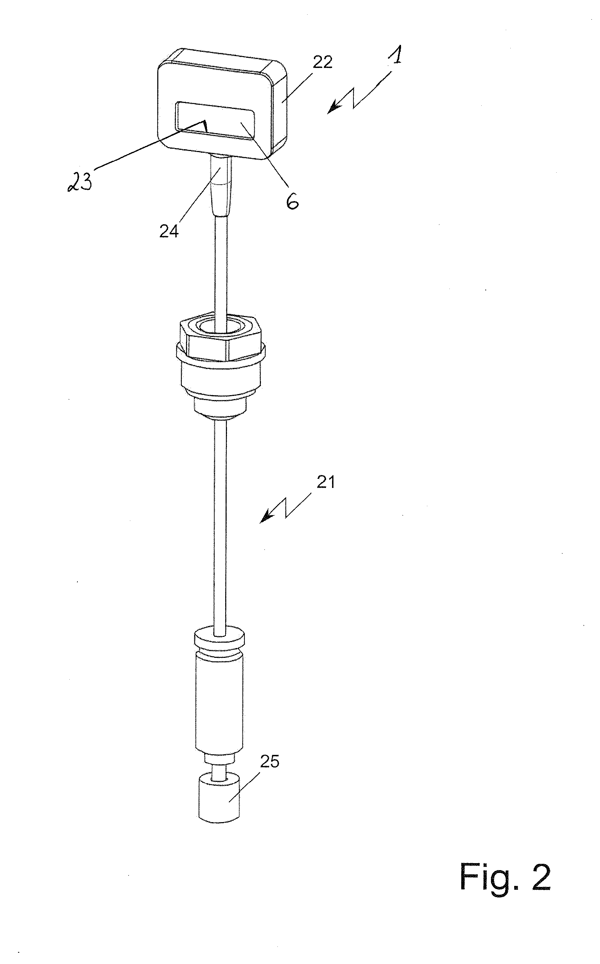

In **Fig. 2** ist das Funkmodul 1 mit daran angeschlossener Messsonde **21** perspektivisch dargestellt. Das Funkmodul 1 ist in ein Gehäuse **22** integriert, welches auf seiner Vorderseite eine Öffnung **23** für die Solarzelle 6 aufweist. Das Funkmodul 1 benötigt keine Batterie- oder Akkuversorgung und wird durch die Solarzelle 6 bei normalem Tageslicht in Räumen oder im Freien betrieben. Durch eine interne Speicherkapazität für die gesammelte Solarenergie kann das Funkmodul 1 auch über mehrere Tage ohne Licht weiter funktionieren. Das Funkmodul 1 ist mit seinem z.B. als Steckbuchse ausgebildeten Anschlusseingang auf einen Stecker **24** der Messsonde 21 aufgesteckt und dadurch mit der Messsonde 21 sowohl befestigt als auch elektrisch verbunden. Bei der Messsonde 21 handelt es sich um einen Mini/Maximelder, welcher je nach Bedarf das Ein- oder Austauchen eines Schwimmers **25** in oder aus einer Flüssigkeit meldet. Zur Montage an einer Wand besitzt das Funkmodul 1 auf seiner in Fig. 2 nicht sichtbaren Rückseite eine steckbare Halterung, welche mit der Wand beispielsweise durch eine Schraub- oder Klebeverbindung fest verbunden wird und auf welche das Funkmodul 1 dann lösbar aufgesteckt werden kann.

## Patentansprüche

1. Messsonden-Funkmodul (1) zur Funkübertragung von digitalen Messsignalen einer Messsonde (9a, 9b, 10a, 10b; 21), aufweisend:
- mindestens einen Anschlusseingang (8a-8d), der ein digitales Messsignal einer Messsonde (9a, 9b, 10a, 10b; 21) erfasst,
- eine Funksendeeinheit (3), die das erfasste digitale Messsignal an einen Empfänger sendet, und
- eine netzunabhängige Energieversorgungseinheit (5), die die Funksendeeinheit (3) mit Energie versorgt,
wobei der mindestens eine Anschlusseingang (8a-8d) mit einer Messsonde (9a, 9b, 10a, 10b; 21) elektrisch verbindbar ist.

2. Funkmodul nach Anspruch 1, **dadurch gekennzeichnet, dass** der mindestens eine Anschlusseingang (8a-8d) für eine Steckverbindung (24) mit der Messsonde (9a, 9b, 10a, 10b; 21) ausgebildet ist.

3. Funkmodul nach Anspruch 1 oder 2, **dadurch gekennzeichnet, dass** die Energieversorgungseinheit (5) durch Solarzellen (23) gespeist ist.

4. Funkmodul nach einem der vorangegangenen Ansprüche, **dadurch gekennzeichnet, dass** die Energieversorgungseinheit (5) mindestens eine Batterie (7) oder einen Akkumulator aufweist.

5. Funkmodul nach einem der vorangegangenen Ansprüche, **dadurch gekennzeichnet, dass** bis zu vier Anschlusseingänge (8a-8d) vorgesehen sind.

6. Messsonde (9a, 9b, 10a, 10b; 21), insbesondere Kontaktmanometer, Leckagesonde, Füllstandsonde, Boden-Wasser Sonde oder dgl., mit einem Funkmodul (1) nach einem der vorangegangenen Ansprüche, wobei der mindestens eine Anschlusseingang (8a-8d) des Funkmoduls (1) mit der Messsonde (9a, 9b, 10a, 10b; 21) elektrisch verbunden ist.

7. Messsonde nach Anspruch 6, **dadurch gekennzeichnet, dass** das Funkmodul (1) mit seinem mindestens einen Anschlusseingang (8a-8d) auf die Messsonde (9a, 9b, 10a, 10b; 21) unter Ausbildung der elektrischen Verbindung aufgesteckt ist.

8. Messsonde nach Anspruch 6, **dadurch gekennzeichnet, dass** das Funkmodul (1) unabhängig von der Messsonde (21) befestigt ist und der mindestens eine Anschlusseingang (8a-8d) des Funkmoduls (1) mittels Kabel mit der Messsonde (9a, 9b, 10a, 10b; 21) elektrisch verbunden ist.
